# EUROPÄISCHE PATENTSCHRIFT

(11) **EP 2 037 246 B1**
(45) Veröffentlichungstag und Bekanntmachung des Hinweises auf die Patenterteilung: **28.11.2012**
(21) Anmeldenummer: 08015793.6
(22) Anmeldetag: 08.09.2008
(51) Int. Cl.: G01K 1/14, G01K 11/32, G01M 3/00

(54) **Verfahren zur Überwachung des Zustandes eines Schlauchs für eine Auskleidung in einem System von Rohren oder Kanälen**
Method for monitoring the state of a hose for a lining in a system of pipes or channels
Procédé destiné à la surveillance de l'état d'un tuyau pour un habillage dans un système de tuyaux ou de canaux

(30) Priorität: 07.08.2007 DE 102007042546
(43) Veröffentlichungstag der Anmeldung: 18.03.2009
(73) Patentinhaber: Glombitza, Ulrich, 51429 Bergisch Gladbach (DE)
(72) Erfinder: Glombitza, Ulrich, 51429 Bergisch Gladbach (DE)

(56) Entgegenhaltungen:
- EP-A2- 0 555 846
- DE-A1- 19 844 753
- DE-U1- 9 318 404

## Beschreibung

Die Erfindung betrifft ein Verfahren zur Überwachung des Zustandes eines Schlauchs für eine Auskleidung in einem Rohr- oder Kanalsystem.

Bei älteren Freispiegelleitungen (Abwasserleitungen, Kanalisation) besteht ein hoher Sanierungsbedarf. Ein Verfahren zur Sanierung von Rohr- oder Kanalsystemen ist das sogenannte Schlauchlining-Verfahren (zum Beispiel EP 0712352 B1 oder WO 2006061129). Bei dieser Technik werden flexible Schlauchträger aus korrosionsbeständigen Synthese- und oder Glasfasern verwendet, die mit einer Reaktionsharzformmasse getränkt sind. Die Formmasse kann aus Polyesterharz, Vinylesterharz oder Epoxidharz bestehen. Der Einbau in den Kanal erfolgt fast ausschließlich über die Kanalschächte, in denen der Schlauch (Liner) entweder durch Inversion (Einstülpen) mittels hydrostatischem Druck oder Luftdruck, durch Einziehen mittels Seilwinde und anschließendem Aufstellen mit Luft- oder Wasserdruck, oder durch eine Kombination von beiden Einbautechniken verbaut wird. Die Aushärtung zum festen Kunststoffrohr (Liner) kann durch Warmaushärtung mittels Heißwasser oder Dampf bzw. durch UV-Lichthärtung erfolgen (UVA- oder LED-Technik).

Die baulichen und betrieblichen Anforderungen an sanierte Kanäle sind hoch. Schlauchlining Verfahren stehen unter besonderer Kontrolle und Prüfung, da ihre Fertigung im Feld unter erschwerten Arbeitsbedingung erfolgt. Die Sicherstellung eines gleichbleibenden Qualitätsstandards wird nach der Verbauung durch Abnahmeprüfungen verifiziert. Qualitätsmängel am Liner bei seiner Installation können z.B. entstehen durch lokale Überhitzung (hervorgerufen durch zu starke Polymerisation des Harzes, bei einer zu hohen Wärmezuführung oder bei einer fehlerhaften Rezeptur) oder durch unvollständige Aushärtungen.

Die Überprüfung der Linerqualität erfolgt heute üblicherweise durch optische Inspektionen im Schachtbereich. Bei Unregelmäßigkeiten oder als Nachweis für die ordnungsmäßige Durchführung der Sanierung wird im Schacht eine Probe gezogen und im Labor ausgewertet. Das Institut für Unterirdische Infrastruktur gGmbH hat in einem Zeitraum von 6 Jahren rund 4.400 Untersuchungen bei Linern durchgeführt. Die Auswertungen zeigen, dass auf Grundlage einer optischen Inspektion keine Rückschlüsse auf die Linerqualität zu ziehen ist.

Das Erkennen von Auffälligkeiten und deren genaue Lokalisierung entlang des Liners erschwert die Abnahme und die Beprobung von Linern. Daher besteht auf Seiten der Hersteller und der Betreiber ein hohes Interesse an einem Prüfverfahren, das für die Abnahme von Linern geeignet ist.

Die Steuerung des Aushärtungsvorganges für lichtaushärtende Verfahren wird u.a. in der EP-A 122 246 beschrieben. Bei diesem Verfahren wird die Temperatur punktförmig an verschiedenen Stellen der Lichterkette (Innenseite der Auskleidung) gemessen und der Steuerung für die Luftstromführung und für die Schrittgeschwindigkeit der Lichtquelle zugeführt. Mit Hilfe der punktuellen Temperatursensoren soll eine gleichmäßige, optimale Aushärtung des Faserschlauches erzielt werden. In einer weiteren Schrift (DE 101 22 565 A1) wird eine Vorrichtung zur Steuerung der UV-Strahlungsquelle in Kombination mit IR-Temperaturen beschrieben. Punktförmig Temperatursensoren haben den Nachteil, dass sie nicht lückenlos die Innenfläche der Auskleidung abdecken.

Nach dem zitierten Stand der Technik wird eine Steuerung der Prozessparameter für die Wärmeeinwirkung am Liner ermöglicht. Einen Rückschluss auf die Linerqualität hinsichtlich einer homogenen Aushärtung ist nicht hinreichend gut möglich, da die Umgebungstemperaturen des Liners und auch die Wärmeleiteigenschaften des umgebenden Erdreichs nicht berücksichtigt werden, bzw. nicht werden können. Die optimale Prozesstemperatur für den Aushärtungsprozess wird auf der Baustelle mit den bekannten Verfahren nur selten erreicht, da je nach Jahreszeit und Witterung das umgebende Erdreich das Altrohr und den Liner mehr oder weniger stark abkühlt. Unregelmäßigkeiten in der Konsistenz und Feuchtigkeit des Erdreichs führen darüber hinaus zu unterschiedlich starker Abkühlung, so dass entlang der Kanaltrasse keine homogene Temperaturverteilung existiert. Eine manuelle Steuerung der Aushärtungsgeschwindigkeit mit punktförmigen Temperatursensoren an wenigen Orten des Liners ist unsicher und meist unzureichend, so dass die Gefahr von Überhitzungen oder von unvollständiger Aushärtung am Liner nicht ausgeschlossen werden kann.

Die US 6 935 376 B1 beschreibt ein Verfahren zum Zusammensetzen rohrförmiger Systeme, bei denen zusätzlich ein elektrischer oder optischer Sensor eingebracht wird zur Detektion von auftretendem Innendruck, beilspielsweise durch einen Verschluss (Verstopfung) im Rohr. Es werden Trägerelemente innerhalb eines Liners und an der Oberfläche des Liners eingebracht, die der Aufnahme von elektrischen Heizleitungen für das Erwärmen der Auskleidungen und der Aufnahme von elektrischen und optischen Leitungen zur Datenübertragung und zur Druck-Messung in der Auskleidung dienen.

In DE 195 09 129 A1 wird ein Verfahren und eine Vorrichtung dargestellt zur Kontrolle und Überwachung des Zustandes von Rohren oder Pipelines, in denen Fluide transportiert werden, deren Temperatur verschieden ist zur Temperatur der Umgebung der Rohre oder Pipelines, unter Anwendung der verteilten faseroptischen Temperaturmessung. Ziel dieser Anwendung ist die Lokalisierung und Detektion von Leckagen entlang von Rohren oder Pipelines. Das Austreten von Fluid wird festgestellt durch eine Temperaturänderung gegenüber der Umgebung.

Es sind weiterhin Anordnungen zur Bestimmung einer Temperatur von ausgedehnten Objekten, insbesondere Pipelines bekannt, wobei ein als thermischer Sensor eingesetzter Lichtwellenleiter in den ausgedehnten Objekten vorzugsweise in Längsrichtung ausgelegt ist (DE 9318404 U1, EP 0555846 A2; DE 19844753 A1). Die DE 9318404 U1 zeigt eine Anordnung in der der Lichtwellenleiter flächig ausgelegt ist. In der Anordnung nach EP 0555846 A2 wird als thermische Sensorik das Raman-Rückstreuverfahren eingesetzt.

Zur faseroptischen, ortsauflösender Temperatursensorik mittels LWL-Sensorfasern seien noch die Raman-Messtechnik (EP 0 692 705 A1) oder die Temperatur-Messung mittels faseroptischer Brillouin-Technik (DE 199 50 880 C1) genannt.

Die Aufgabe der Erfindung ist es, ein Verfahren zur Überwachung eines Schlauchs für eine Auskleidung eines Rohr- oder Kanalsystems anzugeben, welches über einen langen Zeitraum vornehmbar ist, wobei zeitlich einmalige oder zeitlich beliebig wiederholbare Messungen möglich sind.

Die einzelnen Verfahrensschritte sind folgende
- Fertigung eines mit aushärtbarem Harz getränkten, vorzugsweise glasfaserverstärkten Schlauchs,
- in wärmeleitenden Kontaktbringen mindestens eines faseroptischen Sensors mit dem Schlauch und
- Erstellen eines ortsaufgelösten, thermographischen Bildes der Temperatur in Abhängigkeit von Ort und Zeit des Schlauchs mittels faseroptischer, ortsauflösender Temperatursensorik.

Mit dem wärmeleitenden Inkontaktbringen entsteht eine Anordnung eines örtlich verteilten Temperatursensors, welche eine (nahezu) lückenlose Messung der Oberflächentemperaturverteilung des Schlauchs in Form eines ortsaufgelösten thermographischen Bildes in Abhängigkeit von Ort und Zeit ermöglicht. Messungen können zeitlich wiederholt werden, beginnend mit der Fertigung (des noch nicht ausgeharteten Schlauchs, seinem Transport und seiner Lagerung), der Installation (insbesondere der während der Installation vorgenommenen Aushärtung) in einem System, über die Betriebsdauer bis hin zu einer späteren Reparatur des durch Aushärtung umgewandelten Liners.

Mit Hilfe des räumlichen thermographischen Bildes (im folgenden ,Temperaturbild') kann der Aushärtungsprozess des Schlauchs insitu überwacht und einem Prozessmanagement zur Verfügung gestellt werden. Nach ihrer Fertigung müssen Schläuche so gelagert werden, dass sie Licht und/oder Wärme nicht ausgesetzl sind. Manche Hersteller nehmen auch eine Kühlung der Schläuche bis zu ihrer Installation vor. Wird ein faseroptischer Sensor schon in dieser Phase in wärmeleitenden Kontakt mit einem Schlauch gebracht, kann die Temperaturüberwachung sozusagen lückenlos vom Zeitpunkt der Herstellung an gestartet werden.

Bei Auftreten von unvorhersehbaren Wärmeentwicklungen Innerhalb und außerhalb des Schlauchs können über das Prozessmanagement Prozessparameter gesteuert, geändert und/oder angepasst werden. Unter Einbeziehung eines thermisches Modells zu den thermischen Umgebungseigenschaften des Schlauchs kann das Prozessmanagement noch weiter optimalisiert werden.

Weiterhin liefert die Erfindung ein Prüfverfahren, mit dem anhand des Temperaturbildes Messwerte geliefert werden, mit denen eine Bewertung der Qualität der Kanalisation (Hydraulik, Werkstoffbeständigkeit und Dichtheit des Liners) möglich ist. Über das Prüfverfahren, welches zeitlich immer wieder wiederholbar ist, kann jederzeit ein Nachweis für eine fachgerechte Installation (Sanierung) geführt werden.

Die Verwendung von z.B. faseroptischen Raman-Temperatursensoren ermöglicht die ortsaufgelöste, verteilte Temperaturmessung entlang einer optischen Faserstrecke von einer Länge von bis zu einigen Kilometern. Die erzielbare örtliche Auflösung liegt zwischen 0,5 m und 1 m, die Temperaturgenauigkeit beträgt < 1 K und ist abhängig von Messzeit und dem Messort (Reichweite). Eine Ortsauflösung von z.B. 1 m bedeutet, dass der Anzeigewert dem gemittelten Temperaturwert eines 1 m langen Faserstückes entspricht. D.h. Temperaturereignisse, die innerhalb dieses Längenabschnittes auftreten, können nicht exakt gemessen und separiert werden.

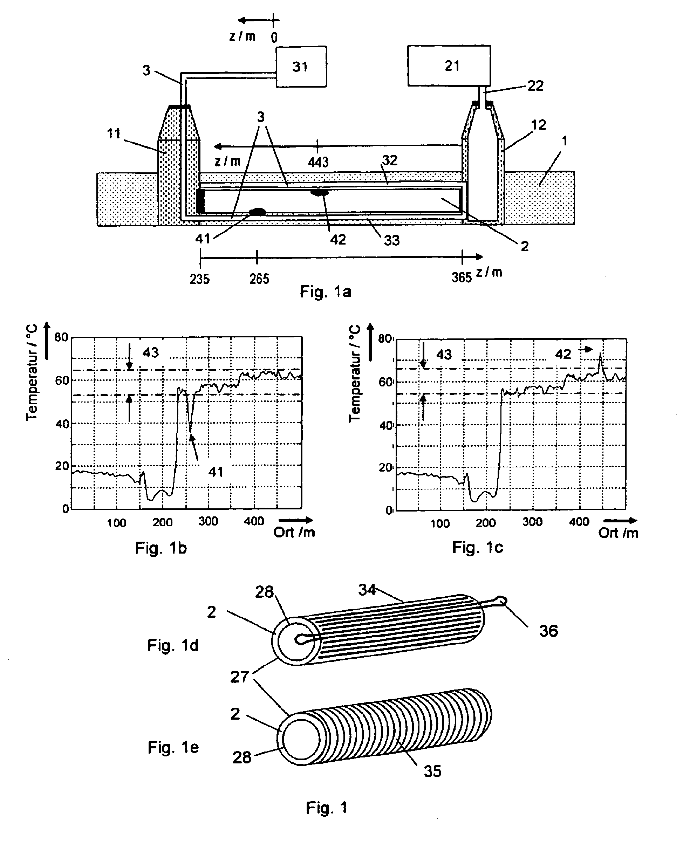

Figur 1 zeigt eine prinzipielle Anordnung eines ausgekleideten Kanals.

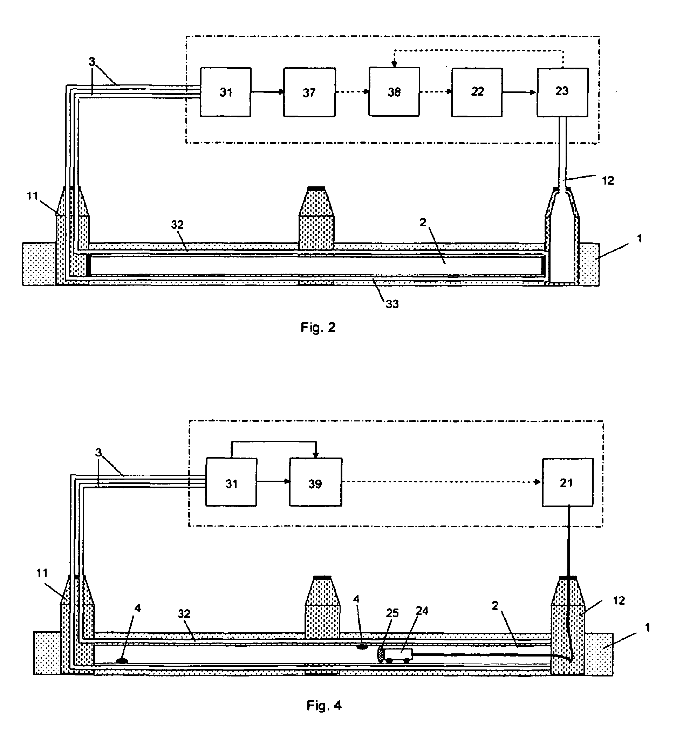

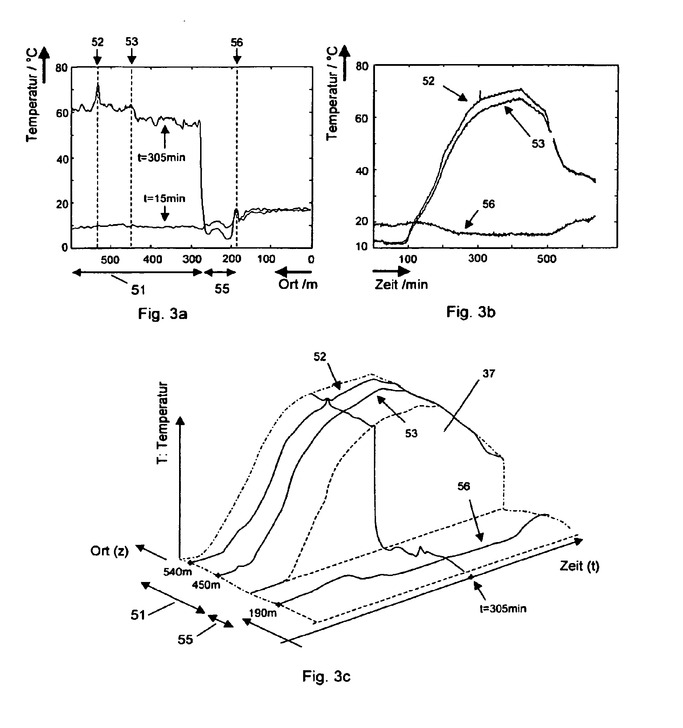

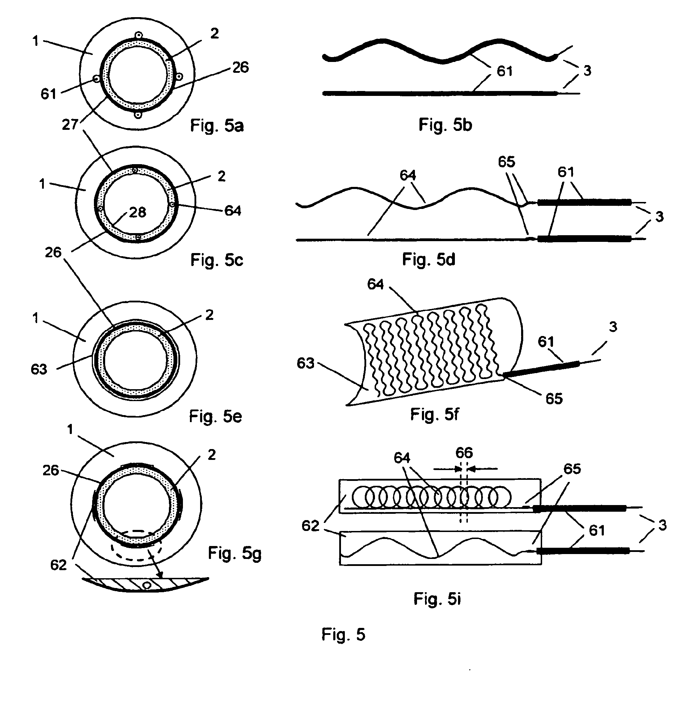

Die Darstellung des zeitlichen und örtlichen Temperaturverlaufes kann vorteilhaft genutzt werden:
(a) um die Prozessführung hinsichtlich einer homogenen Aushärtung des Liners zu überwachen (s. Figur 2);
(b) um Aussagen über die Qualität der Aushärtung entlang des Liners zu treffen (s. Figur 3);
(c) für eine exakte Lokalisierung von Fehlerstellen, beispielweise um Fräsroboter für eine Probenentnahme zu positionieren (s. Figur 4).
   Es folgen Ausführungen bzgl.
(d) Anordnungen und Ausführungen der LWL-Sensoren (LWL: Lichtwellenleiter) (s. Figur 5):
(e) weiterer Verwendungen (Synergien) der Anordnungen und Ausführungen der LWL-Sensoren im Rohr- und Kanalbereich für die faseroptische
   (e1) Leckagedetektion
   (e2) Höhenstandsmessung und
   (e3) Wärmebildmessung.

### Erläuterungen zu (a) Prozessführung der Aushärtung

Unter Anwendung eines thermisch dynamischen Modells kann die Temperatur für eine optimale Aushärtung an jedem Ort des Liners berechnet werden. Das thermisch dynamische Modell basiert auf der Kenntnis der thermischen Widerstände des Linerharzes in Abhängigkeit vom Aushärtungsgrad (die aus Laborversuchen bekannt sind) sowie der Kenntnis der thermischen Widerstände der verwendeten Messanordnung (Sensorkabel, Preliner, Gleitfolie, Altrohr, Erdreich etc.). Das mathematische Modell ist so konzipiert, dass mit Hilfe eines Wärmeersatzbildes unter Berücksichtigung der zugeführten Wärmeenergie und der thermischen Widerstände die resultierenden Wärmeverluste entlang des Liners berechnet werden. Anhand der Wärmeverluste kann die zu erwartende Aushärtungstemperatur sowohl in Quer- als auch in Längsrichtung des Liners ermittelt werden. Dieses Ergebnis wird mit der örtlichen Temperaturverteilung der LWL-Sensoren verglichen, so dass Rückschlüsse auf örtliche Unregelmäßigkeiten möglich sind. Liegt z.B aufgrund von Fremdwasser eine lokale Wärmesenke vor, kann mit Hilfe des Modells die Erhöhung der Wärmeenergie zurückgerechnet werden, um den Wärmeverlust während der Aushärtung zu kompensieren. Diese Methode ist vergleichbar mit dem sogenannten RTTR (Real Time Temperature Rating) Verfahren, das bei thermischer Belastungsberechnung von Energiekabeln verwendet wird.

Um während der Messung den aktuellen (zeitlichen) Aushärtungsgrad für die Berechnung der thermischen Widerstände des Linerharzes zu berücksichtigen, muss das Temperaturmesssystem den örtlichen und den zeitlichen Temperaturverlauf der Messorte aufzeichnen. Die Darstellung der Temperaturwerte als Funktion des Messortes und der Messwiederholzeit ist das Temperaturbild.

### Erläuterungen zu (b) Qualität der Aushärtung

Das Temperaturbild ermöglicht ferner eine Aussage über den Qualitätszustand entlang des Liners. Per Softwareverarbeitung kann der zeitlich gemessene mit dem zeitlich prognostizierten Verlauf verglichen werden. Der Vergleich zeigt, ob entlang des Liners Orte vorliegen, deren Aushärtungstemperatur außerhalb eines vorgegebenen Toleranzbandes liegen.

### Erläuterungen zu (c) Lokalisierung von Fehlerstellen

Bei Qualitätsmängeln am Liner besteht das Interesse, Proben zu entnehmen. Für die Probenentnahme werden im Allgemeinen TV-gesteuerte, mobile Fräsroboter eingesetzt, die in Längsrichtung des Kanals (Liners) fortbewegt werden. Die Koordinaten für die Positionierung des Fräsroboters und die der Verlegeanordnung der LWL-Sensoren unterscheiden sich im Allgemeinen, so dass sie aufeinander abgestimmt werden müssen. Das Einmessen des Sensorkabels an bekannten Orten der LWL-Sensoren ermöglicht eine Zuordnung der Messtrecke. Um eine genauere, exaktere Positionierung des Fräsroboters im Bereich der Schadensstelle zu erreichen, wird eine Wärmequelle (z.B. Infrarot Strahler) am Fräsroboter installiert, die eine lokale Erwärmung in den Sensoren induziert und einen Hot-Spot in der örtlichen Temperaturkurve hervorruft (s. Figur 4). Der Fräsroboter wird so angesteuert, dass sich der Hot-Spot in Richtung der Temperaturstelle bewegt, wo die Schadensstelle festgestellt wurde. Stimmen beide Temperaturorte exakt überein, kann die Probe entnommen werden.

### Erläuterungen zu (d) LWL-Sensoren

Bei der Anordnung von LWL-Sensoren (F asern oder Bündelader oder Kabel) müssen die unterschiedlichen Temperaturentwicklungen bei der Aushärtung (Längs- und Queranordnung der LWL-Sensoren) sowie die geometrischen Abmessungen des Liners berücksichtigt werden.

Beispiel 1: Bei warmhärtenden Schläuchen erfolgt die Verlegung der LWL-Sensoren bevorzugt in Längsachse des Inliner-Schlauchs, so erhält man bei einer Rohrlänge von 100 m und einer örtlichen Auflösung von 1 m pro horizontaler Sensoranordnung 100 Temperaturmesspunkte erhält.

Bei warmhärtenden Verfahren werden die LWL-Sensoren bevorzugt im Bereich des Scheitels (12-Uhr-Stellung) und der Sohle (6-Uhr-Stellung) positioniert, um das Temperaturtoleranzband des Aushärtungsprozess zu erfassen. Durch Kondensatbildung wird beim Dampfverfahren die Temperatur im Bereich der Sohle etwas stärker abgekühlt als im Scheitelbereich. Beim Wasserverfahren erfolgt während des Aufheizprozesses der Transport des heißen Wassers über Schläuche vom Versorgungswagen zum Liner. Beim Einströmen des heißen Wassers entstehen räumliche Temperaturschichten sowohl in Längsrichtung als auch in Querrichtung des Liners. Im Scheitelbereich bilden sich etwas wärmere Wasserschichten als im Sohlenbereich aus.

Beispiel 2: Bei lichthärtenden Schläuchen kann ebenfalls eine Längsanordnung gewählt werden. Durch eine Queranordnung von LWL-Sensoren besteht die Möglichkeit, die Dichte der Messpunkte im Bereich der Wärmeelnwirkung der Lichterkette zu erhöhen. Bei einem Rohrdurchmesser von 1 m beträgt die Sensorkabellänge pro Umlauf 3,14 m. Bei einem mittleren Abstand der Windungen von 25 cm können bei einer Rohrlänge von 100 m ca. 400 Windungen mit einer LWL-Gesamtlänge von 1250 m verbaut werden. Dem Anwender stehen somit über tausend Messpunkte zur Steuerung des Aushärtungsprozesses zur Verfügung.

Ein LWL-Sensor kann als Sensorkabel, Sensorfaser oder Sensormatte ausgeführt werden. Der Aufbau des Sensorkabels besteht üblicherweise aus einer ummantelten Bündelader (Edelstahlröhrchen, Kunststoffröhrchen) mit mindestens einer integrierten LWL-Sensorfaser. Der Durchmesser des Sensorkabels beträgt typischerweise 4 bis 5 mm. Bedingt durch die Bündeladerkonstruktion besitzen Sensorkabel eine relativ hohe Steifigkeit, die eine Verlegung auf kleinen Flächen verhindert bzw. erschwert. Aus diesem Grund wird das LWL-Sensorkabel (s. Figur 5b) bevorzugt zwischen Altrohr und Preliner / Gleitfolie (s. Figur 5a) bzw. zwischen Preliner / Gleitfolie und Liner positioniert.

Bei der Integration eines LWL-Sensors in den Preliner /-Gleitfolie oder direkt in den Liner (s. Figur 5c) wird eine LWL-Bündelader mit geringem Durchmesser (zwischen 0.8mm und 2mm) und mit eingebauter Faser oder einer LWL-Faser (s. Figur 5d) benötigt. Da die LWL-Sensorelemente im Liner während der Sanierung hohem mechanischen Druck- und Zugkräften ausgesetzt werden, muss ein geeigneter LWL-Typ verwendet werden, der unempfindlich gegenüber Mikrokrümmungen ist. Bevorzugt werden sogenannte Multimodefaser mit großen Kerndurchmesser (62,5 µm und größer) und großem Manteldurchmesser (500 µm). Die LWL Faser kann durch eine Bündelader (z.B. aus Kunststoff oder Edelstahl) zusätzlich mechanisch geschützt werden, mit dem Vorzug, thermische Materialausdehnungen der LWL Faser gegenüber seiner Umgebung zu kompensieren. Um einen guten mechanischen Schutz während der Sanierungsmaßnahme zu gewährleisten, wird die LWL-Faser mit einer Spliceverbindung an einem robuster LWL-Sensorkabel angeschlossen.

Eine weitere Ausführungsform eines LWL-Sensors ist eine LWL-Sensormatte (s. Fig. 5g und 5i). Das Sensormattenkonzept ermöglicht die Integration der LWL-Sensorfaser in ein Glasfasergewebe mit gutem mechanischen Schutz sowie den Einbau zwischen Altrohr und Preliner bzw. Gleitfolie (s. Fig. 5g und 5i). Zusätzlich kann bei der LWL-Sensormatte eine Mehrlänge der LWL-Sensoren
a) in radialer Richtung (s. Figur 5f) eingebracht werden, um in Querrichtung des Liners die örtliche Genauigkeit zu erhöhen,
b) in horizontaler Richtung (s. Figur 5i) eingebracht werden, um in Längsrichtung des Liners die örtliche Genauigkeit zu erhöhen.

Um die mechanischen Anforderungen beim Einbau der Sensormatte zwischen Altrohr und Preliner bzw. Gleitfolie zu erfüllen, weist die Sensormatte zum Altrohr eine harte Unterschicht und zum Preliner bzw. Gleitfolie eine weiche Oberschicht auf.

Bei der Anfertigung der Sensormatte muss ein LWL-Typ verwendet werden, der unempfindlich gegenüber Mikrokrümmungen ist, so dass bei der Einbettung der LWL-Sensorfaser ins Verbundmaterial (direkt Einbettung oder in Kombination mit einer Bündelader) die Zusatzverluste tolerierbar und korrigierbar bleiben. Um einen guten mechanischen Schutz zu gewähren, wird die LWL-Faser mit einer Spliceverbindung an einem robuster LWL-Sensorkabel angeschlossen (s. Fig. 5f und 5i).

Bei begehbaren Kanälen besteht die Möglichkeit, den LWL Sensor (Sensorkabel, Sensorfaser oder Sensormatte) am Altrohr zu befestigen.

### Erläuterungen zu (e1) Leckagedetektion

Bei der Sanierung von Kanälen können undichte Stellen auftreten, die eine Unterspülung des Kanals hervorrufen können. Diese Leckagen sind unerwünscht und können nur schwer geortet werden.

Das fließende Kanalwasser besitzt im Allgemeinen eine höhere Temperatur als die Außentemperatur des Inliner-Schlauchs sowie eine höhere Temperatur als die Grundwassertemperatur. Der örtliche Temperaturverlauf in Längsrichtung des Kanals ist nahezu konstant (nur kleiner örtlicher Temperaturgradient). Bei einer Leckage fließt das Kanalwasser durch die Ummantelung zur Sohle des Inliner-Schlauchs. Durch die Anbringung des Sensorkabels unterhalb des Inliner-Schlauchs (6-Uhr-Stellung, zwischen Betonrohr und Inliner-Schlauch, siehe Fig. 2) besteht die Möglichkeit, mit Hilfe der Temperaturmessung Leckagen zu orten. Leckagen bewirken eine lokale Abweichung des örtlichen Temperaturgradienten, so dass diese undichten Stellen lokalisiert werden können.

### Erläuterungen zu (e2) Höhenstandsmessung

Im Abwasserbereich werden unterschiedliche Verfahren von Höhenstandsmessung eingesetzt. Das größte Problem ist, dass Verschmutzungen ungenaue und fehlerhafte Messwerte liefern.

Ein Sensormattenkonzept (s. Fig. 5f und 5i) sowie horizontale LWL-Sensoranordnungen (s. Fig. 1d) können für die Höhenstandsmessung im Kanal verwendet werden. Mit der Auswertung der örtlichen Temperaturwerte kann aufgrund der unterschiedlichen Temperaturen von Fließmedium und der Luft die Wasserhöhe ermittelt werden. Die Vorteile der LWL-Technik sind:
- keine Explosionsgefahr, da passiver Sensor,
- keine Stromzuführung,
- geringe Querschnittsänderung bei nachträglichem Einbau,
- flächig verteilte Messung, daher gegen Wellen unempfindlich,
- mehrere Messungen mit einem Kabel möglich.

### Erläuterungen zu (e3) Wärmebildmessung

Abwasser wird täglich in großen Mengen durch die Abwasserkanalisationen transportiert, in Kläranlagen gereinigt und anschließend in die Vorfluter eingeleitet. Es stellt grundsätzlich ein Abfallprodukt ohne wirtschaftlichen Wert dar. Mit dem Abwasser aus privaten Haushalten, landwirtschaftlichen und industriellen Betrieben werden jedoch nicht nur Schadstoffe abgeleitet, es findet auch eine Erwärmung des Wassers statt. Folglich weist das abfließende Abwasser eine höhere Temperatur auf als bspw. das Trinkwasser.

Es besteht ein verstärktes Interesse, dieses energetische Potenzial des Abwassers für die Wärmeversorgung, d.h. für die Beheizung und Warmwasserversorgung von Liegenschaften zu nutzen. Die Zuleitung des erwärmten Wassers ist nicht konstant sondern von vielen Faktoren (Jahreszeit, Arbeitszeiten, Produktivitäten, Zu- und Abläufe) abhängig. Zur Optimierung des Wärmetauschprozesses ist eine Insitu-Messung der Wassererwärmung nötig. Die erfindungsgemäßen LWL-Sensoranordnungen und Ausführungen eignen sich zur Messung der Temperaturverteilung im Abwasserkanal.

Weitere Merkmale der Erfindungen werden im folgenden genannt. Die Merkmale können einzeln oder gemeinsam verwirklicht sein.

Der faseroptische Sensor kann unmittelbar in den Körper des mit aushärtbarem Harz getränkten, glasfaserverstärkten Schlauchs eingebracht sein.

Der faseroptische Sensor kann als LWL-Sensorkabel eingebracht sein. Wesentlich ist hierbei, dass ein linienhaftes Inkontaktbringen mit dem Schlauch entsteht.

Der faseroptische Sensor kann in einer Matte (Sensormatte) eingebracht sein, wobei die flächige Einbringung mäanderförmig und das Inkontaktbringen flächenhaft erfolgt. Die Schleifen des Mäanders können parallel zur Längserstreckung der Matte, oder senkrecht zur Längserstreckung der Matte eingebracht sein. Die Sensormatte sollte aus einem Kunststoff- oder Glasfasergewebe mit harter Unterseite (nach innen zum Kanal) und weicher Oberseite (nach außen zum Altrohr) bestehen, in welches die Lichtwellenleiter-Sensorfaser direkt oder in Kombination einer Bündelader eingebracht ist.

Eine für das Verfahren geeignete Anordnung entsteht dann dadurch, dass eine mit mindestens einem flächig ausgelegten faseroptischen Sensor hergestellte Sensormatte auf der Innen- oder auf der Außenseite eines mit aushärtbarem Harz getränkten, glasfaserverstärkten Schlauchs aufgebracht ist. Innenseite soll hier zum Zentrum des Rohrs oder des Kanals hin gerichtet, und Außenseite soll hier zum Altrohr hin gerichtet bedeuten.

Das ortsaufgelöste, thermographische Bild der Temperatur in Abhängigkeit von Ort und Zeit (im folgenden kurz als ,Temperaturbild' bezeichnet) wird während der Installation (beim Aushärtevorgang) des Schlauchs/der Auskleidung erstellt. Die Energiezufuhr (Licht und/oder Wärme) auf die Auskleidung wird bei der Aushärtung überwacht. Es kommt zur Kontrolle und Überwachung des Aushärtungsprozesses.

Das Temperaturbild kann mit einem thermischen Modell des Systems in Korrelation gebracht werden. Weiterhin kann das Temperaturbild mit einem vorgebbaren Temperaturtoleranzband in Korrelation gebracht werden. Anhand des Temperaturbildes werden örtliche Abweichungen von gemessenen zu prognostizierten Aushärtetemperaturen festgestellt.

Die festgestellten örtlichen Abweichungen können zur Steuerung eines Roboters verwendet werden, der (beispielsweise) zur Entnahme von Proben entlang des ausgekleideten Rohr- oder Kanalsystems verfahrbar.

Zur Durchführung des Mess-Verfahrens sollte der mindestens eine faseroptische Sensor zwischen Auskleidung und Altrohr eingebracht sein.

Danach liegt zwischen Liner und Altrohr mindestens ein Lichtwellenleiter-Sensorkabel oder eine Lichtwellenleiter-Sensormatte.

Alternativ zur genannten Ausführung, kann der mindestens eine faseroptische Sensor auch innerhalb eines Preliners oder innerhalb einer Gleitfolie liegen, welche gemeinsam mit dem Liner in ein System eingebracht werden.

Zur Steuerung der Prozessparameter für die Wärmeeinwirkung am Liner kommt es darauf an, ob der LWL-Sensor in der Innenseite der Auskleidung (zum Kanalzentrum) oder auf der Außenseite (zum Altrohr hin) positioniert bzw. eingebracht ist. Durch die relativ geringe Wärmeleitfähigkeit eines glasfaserverstärkten Schlauch; bzw. durch den Kontakt außen mit dem Altrohr und der damit verbundenen Wärmeableitung treten zwischen Innen und Außen durchaus Temperaturunterschiede von 5 bis 10 K auf.

Die faseroptische Temperatursensorik kann zur ortsaufgelösten Wasser-Höhenstandsmessung in Rohr- und Kanalsystemen, bzw. zur Temperaturmessung des Abwassers eingesetzt werden.

Die eingesetzte faseroptische Temperatursensorik kann in Form der Raman-Temperatursensorik eingesetzt werden.

Die Erfindung soll nachfolgend anhand von einigen Ausführungsbeispielen in den Figuren näher erläutert werden. Es zeigen:
- Figur 1:: Prinzipanordnung der faseroptischen Temperaturmessung bei der Kanalsanierung mittels Schlauchlining-Verfahren;
- Figur 1a:: Schematische Darstellung der örtlichen Gegebenheiten;
- Figur 1b:: Temperaturkurve als Funktion des Faserortes mit einer Unregelmäßigkeit im Sohlenbereich des Liners;
- Figur 1c:: Temperaturkurve als Funktion des Faserortes mit einer Unregelmäßigkeit im Scheitelbereich des Liners
- Figur 1d:: LWL-Sensoranordnungen n Längsrichtung des Liners;
- Figur 1e:: LWL-Sensoranordnungen n Querrichtung des Liners;
- Figur 2:: Schematische Darstellung der Vorrichtung für die Prozesssteuerung der Lineraushärtung;
- Figur 3:: Erläuterungen zur Linerqualität;
- Figur 3a:: Örtlicher Temperaturkurve zum Messzeitpunkt; t
- Figur 3b:: Zeitlicher Temperaturkurve von ausgewählten Messorten;
- Figur 3c:: Schematische Darstellung eines thermographischen Bildes in Bezug auf Figur 3a und 3b.
- Figur 4:: Schematische Darstellung der Vorrichtung für die Positionierung des Fräsroboters;
- Figur 5:: Schematische Darstellung von Anordnungen und Ausführungen des LWL-Sensors;
- Figur 5a:: Beispiele für Sensorkabelanordnungen zwischen Altrohr und Preliner / Gleitfolie;
- Figur 5b:: Beispiele für Ausführungen des LWL-Sensors in Bezug auf Figur 5a
- Figur 5c:: Beispiele für Sensorfaseranordnungen innerhalb des Liners;
- Figur 5d:: Beispiele für Ausführungen des LWL-Sensors in Bezug auf Figur 5c;
- Figur 5e:: Beispiel für eine Sensormattenanordnung mit radialer Einbaurichtung zwischen Altrohr und Preliner / Gleitfolie;
- Figur 5f:: Beispiel für die Sensormattenausführung in Bezug auf Figur 5e
- Figur 5g:: Beispiel für eine Sensormattenanordnung mit längsorientierte Einbaurichtung zwischen Altrohr und Preliner / Gleitfolie;
- Figur 5i:: Beispiele für die Sensormattenausführungen in Bezug auf Figur 5g;
- Figur 6:: LWL Sensormattenausführungen zur Wasser-Höhenstandsmessung.

Fig. 1 zeigt die Prinzipanordnungen zur Messung des Aushärtungszustandes während der Kanalsanierung unter Anwendung der faseroptischen Temperaturmessung. Dargestellt ist in Figur 1a ein im Kanal 1 verbauter Liner 2. Die Zuführung der Wärmeenergie 22 für die Aushärtung des Liners erfolgt vom Versorgungswagen 21 über den Schacht 12. Der Einbau des Sensorkabels 3 dagegen erfolgte vom gegenüberliegenden Schacht 11. Das dargestellte Beispiel zeigt eine Sensoranordnung in Form einer Stichleitung. Das optische Messsignal wird im Auswertegerät 31 (optisches Rückstreumessgerät) erzeugt und in das Sensorkabel (Lichtwellenleiter: LWL) eingekoppelt. Das aus dem LWL rückgestreute Licht kann in bekannter Weise für die örtlich verteilte Temperaturmessung verwendet werden. Das Sensorkabel ist so angeordnet, dass der örtliche Temperaturgraph (Fig. 1b und Fig. 1c) der Einzelmessung, die Temperatur entlang der LWL Zuleitung (bis ca. Ortspunkt 150m), entlang des Schachtbereiches (zwischen 150m und 235m) sowie die Temperaturverteilung entlang des Sohlenbereiches (zwischen 235m und 365m) und des Scheitelbereiches (zwischen 365m und 495m) des Liners repräsentiert. Das zulässige Temperaturtoleranzband 43 für den Aushärtungsprozess der jeweiligen Rezeptur kann in die softwaretechnische Auswertung und Darstellung der örtlichen Temperaturkurven implementiert werden, so dass Unregelmäßigkeiten erkannt, beurteilt und lokalisiert werden können. Unregelmäßigkeiten z.B. durch lokale Zuläufe von Fremdwasser 41 oder durch lokale Überhitzungen 42 sind in den Temperaturmesskurve der Figur 1b bzw. Figur 1c dargestellt.

Figur 1d zeigt eine Sensoranordnung; bei dem der LWL-Sensor 3 in horizontaler Richtung zum Liner positioniert ist, um eine hohe Messdichte in Längsrichtung des Liners zu erzielen. Am jeweiligen Ende des Liners 2 wird der LWL in Form von Schlaufen 36 zurückgeführt. Längsanordnungen des LWL-Sensors 34 werden bevorzugt bei warmaushärtenden Linern verwendet. Figur 1e zeigt eine Sensoranordnung, bei der der LWL-Sensor 3 in radialer Richtung zum Liner positioniert ist, um eine hohe Messdichte in Querrichtung 35 des Liners zu erzielen. Queranordnungen des LWL-Sensors 35 werden bevorzugt bei lichtaushärtenden Linern verwendet.

Die Figur 2 zeigt eine Vorrichtung für die Prozesssteuerung der Lineraushärtung, in Kombination mit einer faseroptischen Temperaturmessung unter Anwendung eines thermischen Modells. Der Einbau des Sensorkabels 3 erfolgt über zwei Haltungen (3 Schächte) mit jeweils einer Stichleitung für den Scheitelbereich 32 und einer Stichleitung für den Sohlenbereich 33 des Liners 2. Das Auswertegerät 31 berechnet anhand der örtlichen und zeitlichen Temperaturmessdaten des LWL-Sensors (thermographisches Bild 37) die aktuellen thermischen Widerstände des Linerharzes. Diese Daten werden zusammen mit der (aktuellen) zugeführten Wärmeenergie einem thermischen Modell 38 für die Weiterberechnung zur Verfügung gestellt. Die zugeführte Wärmeenergie kann z.B. (indirekt) aus den Prozessparametern 23 der Wärmeenergieversorgung oder (direkt) durch Messung der Prozesstemperatur ermittelt werden. Entsprechend dem Ergebnis des thermisch dynamischen Modells wird die Zufuhr der Wärmeenergie 22 erhöht oder erniedrigt.

Die Figur 3 soll Zusammenhänge hinsichtlich Aussagen zur Linerqualität verdeutlichen. Die Graphen der Figuren 3a bis 3c beziehen sich auf die Prinzipanordnung der Figur 1a und zeigen den Temperaturverlauf während der Aushärtung eines Liners in verschiedene Darstellungsformen. Die Figur 3a repräsentiert u.a. den örtlichen Temperaturverlauf im Schachtbereich 55 und im Kanalbereich 51 zu einer bestimmten Messzeit (t = 305 min in Bezug auf den Start der Messung). Die zeitlichen. Verläute der in Fig. 3a markierten Ortspunkte (52, 53 und 56) sind in der Figur 3b über den gesamten Messzeitraum (600 min) dargestellt. Der Bereich des Liners am Ortspunkt 52 zeigt eine zeitliche Unregelmäßigkeit in Form einer kurzfristigen Erhöhung zur Messzeit t = 305 min. Am Crtspunkt 53 liegt keine Unregelmäßigkeit vor, allerdings wird an dieser Stelle eine geringere Aushärtungstemperatur erzielt als an der Stelle 52. Der zeitliche Temperaturverlauf 56 zeigt lediglich die Umgebungstemperatur gemäß den vorherrschenden Witterungsbedingungen ("Tagesgang") am Schachteingang. Figur 3c präsentiert die Möglichkeit einer thermographischen Darstellung des Temperaturverlaufes in Abhängigkeit von Ort und Zeit.

Figur 4 nimmt Bezug auf die Problematik bei der Probenentnahme mittels Fräsroboter und zeigt eine Vorrichtung zur Positionierung eines Fräsroboters. Bei Feststellung von Qualitätsmängeln 4 am Liner, wird mit Hilfe eines Fräsroboters 24 eine Probe am Liner 2 entnommen. Die Positionierung des Fräsroboters erfolgt z.B. vom Versorgungswagen 21. Um eine möglichst exakte Positionierung zu erzielen, besitzt der Fräsroboter eine Wärmequelle 25. Per Software kann die Entfernung des Temperaturortes der Wärmequelle 25 vom Temperaturort der Schadensstelle berechnet werden. Gemäß dem Ergebnis eines Koordinatenabgleichs 29 wird der Fräsroboter erneut positioniert, bis die exakte Stelle für die Probenentnahme gefunden ist.

Die Figuren 5a bis 5i zeigen Beispiele in Form von schematischen Darstellungen verschiedener Anordnungen und Ausführungen des LWL-Sensors für den Einsatz in Rohr- und Kanalsystemen unter Anwendung von Schlauchlining Verfahren.

Der LWL-Sensor kann als LWL-Sensorkabel 61 (s. Fig. 5b), als LWL-Sensorfaser 64 (s. Fig. 5d) oder als LWL-Sensormatte 62, 63 (s. Fig. 5f und 5i) ausgeführt sein. Je nach Ausführungsform und nach Begehbarkeit des Kanals erfolgt die Anordnung des LWL Sensors. Das LWL-Sensorkabel 61 wird bevorzugt zwischen Altrohr / Kanal 1 und Preliner / Gleitfolie 26 positioniert (s. Fig. 5a), die LWL-Sensorfaser 64 eignet sich dagegen für die Integration in den Liner 2 (s. Fig. 5c) und die LWL-Sensormatte 62, 63 wird bevorzugt zwischen Altrohr und Preliner / Gleitfolie verbaut (s. Fig. 5e und Fig. 5g). Bei begehbaren Kanälen können alle LWL Sensorausführungen am Altrohr befestigt werden. Das Sensormattenkonzept ermöglicht die örtliche Genauigkeit des Sensormesssystems zu erhöhen, indem durch ein wählbares Streckverhältnisses 66 eine Mehrlänge des LWL-Sensorkabels in Längsrichtung des Liners (s. Figur 5i) oder in Querrichtung (s. Figur 5f) eingebracht wird. Um einen guten mechanischen Schutz während der Sanierungsmaßnahme zu gewährleisten, wird die LWL-Sensorfaser 64 mit einer Spliceverbindung 65 an einem robuster LWL-Sensorkabel 61 angeschlossen.

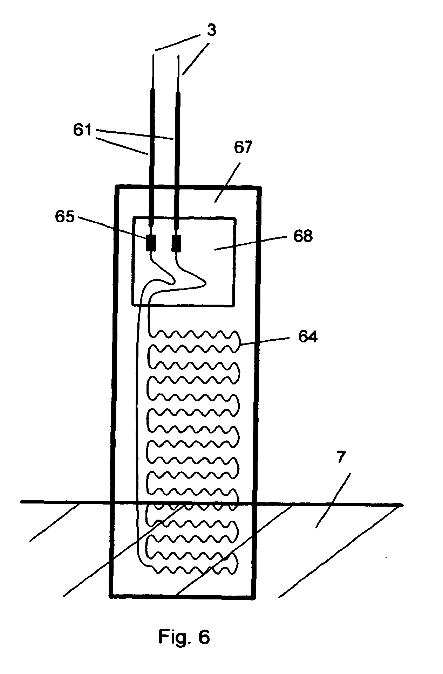

Figur 6 zeigt ein Beispiel einer Sensormattenausführung mit Muffe 67 für die Höhenstandsmessung im Schachtbereich. Um die örtliche Genauigkeit in vertikaler Richtung (Wasserstandsrichtung) zu erhöhen, wird die LWL-Faser 64 mäanderförmig angeordnet. Um eine einfache und schnelle Installation im Kanal zu ermöglichen, beinhaltet die Sensormatte eine Splicecassette 68. Um einen guten mechanischen Schutz zu gewährleisten, wird die LWL Sensorfaser 64 mit einer Spliceverbindung 65 an einem robuster LWL Sensorkabel 61 angeschlossen.

### Übersicht der Bezeichnungen in den Figuren:

1: Kanal
11: Schacht A
12: Schacht B
2: Liner
21: Versorgungswagen
22: Zufuhr der Wärmeenergie
23: Prozessparameter
24: Fräsroboter
25: Wärmequelle
26: Preliner / Gleitfolie
27: Außenseite des Liners
28: Innenseite des Liners
3: LWL-Sensor
31: Faseroptisches Auswertegerät
32: LWL im Scheitelbereich
33: LWL im Sohlenbereich
34: LWL in Längsrichtung
35: LWL in Querrichtung
36: LWL Schlaufe
37: Thermographisches Bild
38: Thermisches Modell
39: Koordinatenabgleich
4: Unregelmäßigkeiten
41: Überhitzung
42: Fremdwasser
43: Temperaturtoleranzband
51: Kanalbereich (KB)
52: Messort 1 im KB
53: Messort 2 im KB
54: Messort 3 im KB
55: Schachtbereich (SB) 56: Messort 1 im SB
61: LWL-Kabel
62: LWL-Sensormatte (Längstyp)
63: LWL-Sensormatte (Quertyp)
64: LWL-Sensorfaser
65: LWL-Spliceverbindung
66: Streckverhältnis
67: LWL-Sensormatte mit Muffe
68: LWL-Splicecassette
7: Wasserpeget

## Patentansprüche

1. Verfahren zur Überwachung eines thermischen Zustandes eines Schlauchs (2),
• welcher als Auskleidung in einem System von Rohren oder Kanälen liegt,
• wobei mindestens ein faseroptischer Sensor (3) für ortsaufgelöste Temperatursensorik in wärmeleitendem Kontakt mit dem Schlauch (2) gebracht ist,
• und mittels der faseroptischen, ortsauflösten Temperatursensorik ein ortsaufgelöstes, Temperaturmessdaten darstellendes thermographisches Bild (37) der Temperatur in Abhängigkeit von Ort (z) und Zeit (t) erstellt wird, **dadurch gekennzeichnet dass**
o der Schlauch mit aushärtbarem Harz getränkt ist, und
o das thermographische Bild während der Installation und der Aushärtung des Schlauchs in dem System erstellt wird.

2. Verfahren nach Anspruch 1, **gekennzeichnet durch** ein flächiges und mäanderförmiges Inkontaktbringen des mindestens einen faseroptischen Sensors (3, 64) mit dem Schlauch (2).

3. Verfahren nach Anspruch 1, **gekennzeichnet durch** ein linienhaftes Inkontaktbringen des mindestens einen faseroptischen Sensors (3, 64) mit dem Schlauch (2).

4. Verfahren nach einem der vorhergehenden Ansprüche, **dadurch gekennzeichnet, dass** das thermographische Bild (37) mit einem thermischen Modell des Systems in Korrelation gebracht wird.

5. Verfahren nach einem der vorhergehenden Ansprüche, **dadurch gekennzeichnet, dass** das thermographische Bild (37) mit einem vorgebbaren Temperaturtoleranzband in Korrelation gebracht wird.

6. Verfahren nach einem der vorhergehenden Ansprüche **gekennzeichnet durch** Feststellen von örtlichen thermischen Abweichungen von gemessenen zu prognostizierten Aushärtetemperaturen anhand des thermographischen Bildes (37).

7. Verfahren nach Anspruch 6, **gekennzeichnet durch** Steuern eines im System verfahrbaren Roboters (24) an mindestens einen Ort mit festgestellter thermischen Abweichung unter Verwendung der festgestellten örtlichen thermischen Abweichungen.

8. Verfahren nach einem der vorhergehenden Ansprüche, **gekennzeichnet durch** das Inkontaktbringen des mindestens einen faseroptischen Sensors (3) an einem Ort im System zwischen auszuhärtendem Schlauch (2) und einem Altrohr.

9. Verfahren nach einem der Ansprüche 1 bis 8, **gekennzeichnet durch** das Inkontaktbringen des mindestens einen faseroptischen Sensors (3) innerhalb eines mit aushärtbarem Harz getränkten, glasfaserverstärkten Schlauchs.

10. Verfahren nach einem der vorhergehenden Ansprüche, **gekennzeichnet durch** den Einsatz einer faseroptischen Temperatursensorik in Form einer Raman-Temperatursensorik

## Claims

1. Method for monitoring the thermal state of a hose (2),
which is positioned as lining in a system of pipes or channels,
wherein at least one fibre-optical sensor (3) for spatial-resolved temperature sensor technology is in thermally conductive contact with the hose (2),
and wherein by the fibre-optical, spatial-resolved temperature sensor technology a thermographic picture (37) is created indicating the temperature depending on space (z) and time (t),
**characterized in that**
• the hose (2) is impregnated with curable resin,
• and the thermographic picture is created during the installation and the curing of the hose in the system.

2. Method according to claim 1, **characterized by** disposing the at least one fibre-optical sensor (3, 64) with the hose (2) in a two dimensional and meander-shaped fashion.

3. Method according to claim 1, **characterized by** disposing the at least one fibre-optical sensor (3, 64) with the hose (2) in a linear fashion.

4. Method according to one of the previous claims, **characterized in that** the thermographic picture (37) is put into correlation with a thermal model of the system.

5. Method according to one of the previous claims, **characterized in that** the thermographic picture (37) is put into correlation with a predefined temperature tolerance band.

6. Method according to one of the previous claims, **characterized by** determination of local thermal deviations between measured and predicted curing temperatures on the basis of the thermographic picture (37).

7. Method according to claim 6, **characterized in** control of a displaceable robot (24) in the system to at least one point with determined thermal deviation by using the determined local thermal deviations.

8. Method according to one of the previous claims, **characterized by** disposing the at least one fibre-optical sensor (3) at one position in the system between the hose (2) to be cured and an old pipe.

9. Method according to one of the claims 1 to 8, **characterized in** disposing the at least one fibre-optical sensor (3) within a glass fibre-reinforced hose impregnated with resin.

10. Method according to one of the previous claims, **characterized in** using of a fibre-optical temperature sensor technology in the form of a Raman temperature sensor technology.

## Revendications

1. Procédé de surveillance de l'état thermique d'un flexible (2),
• qui se trouve en tant que habillage dans un système de tuyau ou de canaux,
• sachant qu'au moins un capteur à fibre optique (3) est mis en contact thermo-conducteur avec le flexible (2) pour la technologie des capteurs de température à définition locale.
• et au moyen de la technologie des capteurs de température à fibre optique, à définition locale, une image thermographique (37) représentant des données de mesure de température à définition locale est créée en fonction du lieu (z) et du temps (t),
**caractérisé en ce que**
• le flexible est imprégné de résine thermodurcissable et
• l'image thermographique est créée dans le système pendant l'installation et le durcissement du flexible.

2. Procédé selon revendication 1, **caractérisé par** une mise en contact plane et en forme de méandre du capteur à fibre optique minimum (3, 64) avec le flexible (2).

3. Procédé selon revendication 1, **caractérisé par** une mise en contact linéaire du capteur à fibre optique minimum (3, 64) avec le flexible (2).

4. Procédé selon l'une des revendications précédentes, **caractérisé en ce que** l'image thermographique (37) est mise en corrélation avec un modèle thermique du système.

5. Procédé selon l'une des revendications précédentes, **caractérisé en ce que** l'image thermographique (37) est mise en corrélation avec une plage de tolérance de température pouvant être fixée.

6. Procédé selon l'une des revendications précédentes, **caractérisé par** détection de divergences locales thermiques de températures de durcissement mesurées à prognostiquer au moyen de l'image thermographique (37).

7. Procédé selon revendication 6, **caractérisé par** réglage d'un robot (24) déplaçable dans le système sur au moins un endroit avec divergence thermique détectée par l'utilisation divergence thermique détectée.

8. Procédé selon l'une des revendications précédentes, **caractérisé par** mise en contact du capteur à fibre optique minimum (3) sur un endroit dans le système entre le flexible à durcir (2) et un ancien tuyau.

9. Procédé selon l'une des revendications 1 à 8, **caractérisé par** la mise en contact du capteur à fibre optique minimum (3) à l'intérieur d'un flexible renforcé par fibres de verre imprégné avec de la résine thermodurcissable.

10. Procédé selon l'une des revendications précédentes, **caractérisé par** l'utilisation d'une technologie des capteurs de température à fibre optique sous forme de technologie des capteurs de température Raman.
